# EUROPEAN PATENT SPECIFICATION

(11) **EP 2 896 825 B1**
(45) Date of publication and mention of the grant of the patent: **31.10.2018**
(21) Application number: 12890329.1
(22) Date of filing: 19.12.2012
(51) Int. Cl.: F03D 80/50, F03D 9/28

(54) **RENEWABLE ENERGY POWER GENERATION DEVICE**
VORRICHTUNG ZUR STROMERZEUGUNG MITHILFE ERNEUERBARER ENERGIEN
DISPOSITIF DE PRODUCTION D'ÉLECTRICITÉ À ÉNERGIE RENOUVELABLE

(43) Date of publication of application: 22.07.2015
(73) Proprietor: Mitsubishi Heavy Industries, Ltd., Tokyo 108-8215 (JP)
(72) Inventor: KAMEDA, Takuro, Tokyo 108-8215 (JP); DODSON, Henry, Midlothian Lothian EH20 9TB (GB); ROBERTSON, Alasdair, Midlothian Lothian EH20 9TB (GB)
(74) Representative: Intès, Didier Gérard André
(86) International application number: PCT/JP2012/082937
(87) International publication number: WO 2014/097427

(56) References cited:
- WO-A1-2012/137311
- WO-A2-2012/073277
- JP-A- 2004 532 370
- JP-A- 2005 105 917
- US-A1- 2010 032 959
- US-A1- 2010 032 959

## Description

### TECHNICAL FIELD

The present disclosure relates to renewable energy power generating apparatuses. A renewable energy power generating apparatus utilizes renewable energy such as wind, tidal current, ocean current, and river current. A wind turbine power generating apparatus, a tidal current power generating apparatus, an ocean current power generating apparatus, a river current power generating apparatus, or the like can be mentioned as an example of a renewable energy power generating apparatus.

### BACKGROUND

In view of the increasing environmental awareness, a wind turbine power generating apparatus has drawn attention in recent years as a renewable energy power generating apparatus. A wind turbine power generating apparatus generally includes a rotor in which a plurality of blades is attached to a hub. The rotor is mounted to a nacelle disposed on a tower built on the ground or on the ocean. In a wind turbine power generating apparatus of this type, the rotor rotates upon receiving wind at the blades, so that rotation of the rotor is transmitted to a generator housed in the nacelle by a drivetrain part, the generator thereby generating electric power.

Patent Document 1 discloses a wind turbine power generating apparatus using a hydraulic pump and a hydraulic motor as a drivetrain part. In this wind turbine power generating apparatus, the hydraulic pump is driven by a hub so that pressurized oil is produced, and this pressurized oil drives the hydraulic motor. Then, in a generator coupled to the hydraulic motor, rotation energy inputted from the hydraulic motor is converted into electric energy, and thereby electric power is generated. Further, as a specific example of a shaft system of the drivetrain part, Patent Document 1 discloses a rotor shaft disposed between a hub and a hydraulic pump and supported by two bearings, the rotor shaft having an end coupled to a rotor part of the hydraulic pump. Patent Document 1 also discloses a shortened rotor shaft and a rotor part of the hydraulic pump fixed to the hub, the rotor part being supported by two bearings.

Although not related to a wind turbine power generating apparatus including a hydraulic pump and a hydraulic motor as a drivetrain part, Patent Documents 2 to 4 disclose a typical configuration example of a hub and a hub peripheral area of a wind turbine power generating apparatus.

### Citation List

### Patent Literature

Patent Document 1: US Patent Application Pub. No. 2010/0032959
Patent Document 2: DE 102008063874A
Patent Document 3: Japanese Patent Unexamined Application Pub. No. 2005-337267
Patent Document 4: Japanese Patent Unexamined Application Pub. No. 2009-162380

### SUMMARY

### Technical Problem

Meanwhile, renewable energy power generating apparatuses such as a wind turbine power generating apparatus have been increased in size from the perspective of improving the power generation capacity. Thus, a drivetrain part of a renewable energy power generating apparatus tends to increase in size and weight to transmit large torque. As a result, a nacelle base plate supporting the drivetrain part has increased in size, and the increased weight of a nacelle results in an increase in the manufacture cost of a renewable energy power generating apparatus. It is desirable to develop a supporting structure for a drivetrain part, including a nacelle base plate whereby the weight of a nacelle can be reduced.

In this regard, Patent Document 1 does not disclose a support part for supporting a rotor shaft and a hydraulic pump on a nacelle base plate, in the first place. Furthermore, Patent Document 1 does not disclose or suggest a configuration for supporting a rotor shaft and a hydraulic pump on a nacelle base plate to reduce the weight of a nacelle with such a support part without interrupting maintainability of devices disposed inside the nacelle.

Further, in the first place, Patent Documents 2 to 4 are not related to a wind turbine power generating apparatus with a drivetrain part including a hydraulic pump and a hydraulic motor.

An object of at least one embodiment of the present invention is to provide a renewable energy power generating apparatus which has great maintainability and whereby the weight of a nacelle can be reduced.

### Solution to Problem

A renewable energy power generating apparatus according to a first aspect of the present invention is defined in claim 1. This apparatus includes: at least one blade; a hub to which the at least one blade is mounted; a hydraulic pump including a rotor part fixed to the hub and configured to rotate with the hub, a pressurized-oil generation mechanism configured to produce pressurized oil by rotation of the rotor part, a stator part which forms a pump interior space for accommodating the pressurized-oil generation mechanism with the rotor part, and at least one pump bearing disposed between the rotor part and the stator part; a nacelle for housing at least the hydraulic pump; a tower for supporting the nacelle; a yaw rotation bearing for rotatably supporting a nacelle base plate of the nacelle on the tower; at least one support part for supporting the stator part of the hydraulic pump on the nacelle base plate of the nacelle; at least one hydraulic motor configured to be driven by the pressurized oil produced by the pressurized-oil generation mechanism; and a generator configured to be driven by the at least one hydraulic motor. The rotor part is supported to the nacelle base plate exclusively by the at least one pump bearing so as to be rotatable. The at least one support part is configured to support the stator part on the nacelle base plate so that the hydraulic pump is disposed between the hub and a center axis of the yaw rotation bearing. The at least one support part includes an access passage for connecting a first space and a second space. The first space is disposed in the nacelle and accommodates the hydraulic pump. The second space is disposed in the nacelle and at an opposite side of the at least one support part from the first space.

In the present specification, the rotor part of the hydraulic pump being supported "exclusively" by the at least one pump bearing means that the pump bearing of the hydraulic pump is the only bearing supporting the rotor part to be rotatable. For example, in a case where the rotor part of the hydraulic pump is connected to a main shaft that is supported on a nacelle base plate via a main bearing to rotate with a hub, the pump bearing does not support the rotor part "exclusively", because the rotor part of the hydraulic pump is rotatably supported not only by the pump bearing, but also by the main bearing.

In the above renewable energy power generating apparatus, the rotor part is supported to the nacelle base plate exclusively by the at least one pump bearing so as to be rotatable. Thus, it is possible to shorten the shaft system for power transmission from the hub to the hydraulic pump. Specifically, the shaft system of the above renewable energy power generating apparatus may be designed to be short as compared to a shaft system where the rotor part is not exclusively supported to be rotatable by the pump bearing. As a result, it is possible to dispose the hydraulic pump closer to the hub as compared to a case where the rotor part is not exclusively supported to be rotatable by the pump bearing, and between the hub and the center axis of the yaw rotation bearing. Such layout of the hydraulic pump contributes to considerable reduction in the size and weight of the nacelle that accommodates the hydraulic pump. Thus, in order to achieve the above layout of the hydraulic pump, in the above renewable energy power generating apparatus, the stator part of the hydraulic pump is supported on the nacelle base plate by the at least one support part so that the hydraulic pump is disposed between the hub and the center axis of the yaw rotation bearing. Here, the at least one support part includes the access passage, which makes it possible for a worker or a component to transfer between the first space and the second space in the nacelle via the access passage. Thus, it is possible to reduce the weight of the nacelle while ensuring maintainability.

In this apparatus, the stator part is disposed radially inside the rotor part. The at least one support part is a tubular member including a bend portion which extends from the nacelle base plate toward the hub. The bend portion has a distal end connected to an end of the stator part which is remote from the hub. The tubular member includes an opening disposed on an outer side of a curved cross-sectional shape of the bend portion, the opening serving as the access passage.

In this way, with the opening serving as the access passage disposed on the outer side of the curved cross-sectional shape of the bend portion, it is possible for a maintenance worker to move in and out of the support part (tubular member) via the access passage more easily, which makes it possible to perform maintenance on the hydraulic pump efficiently. Thus, the maintainability of the hydraulic pump is improved.

Further, since the stator part is disposed radially inside the rotor part, providing a hollow part inside the stationary stator part makes it possible to arrange objects in the hollow part so that the objects arranged in the hollow part are supported on the stator part.

In some embodiments, the stator part includes a hollow part accommodating at least one of a device, a cable, or a pipe in the nacelle. In some embodiments, the at least one hydraulic motor is disposed in the hollow part of the stator part.

In one embodiment, the stator part includes an inner flow channel for supplying or discharging working oil to or from the pressurized-oil generation mechanism. The inner flow channel extends radially inward from the pressurized-oil generation mechanism. An oil pipe for transferring the working oil is disposed in the hollow part and between the hydraulic pump and the at least one hydraulic motor. The oil pipe has an end connected to the inner flow channel.

As described above, the oil pipe disposed between the hydraulic motor and the hydraulic pump is disposed in the hollow part of the stator part, which makes it possible to further reduce the size of the nacelle, and to further reduce the weight of the nacelle.

In some embodiments, the pressurized-oil generation mechanism includes: at least one ring cam disposed on an inner circumferential surface of the rotor part and configured to rotate with the rotor part, the at least one ring cam including a plurality of projections and recesses arranged in a circumferential direction; a plurality of cylinders disposed on a stator part side and arranged radially on an inner side of the at least one ring cam; a plurality of pistons each configured to be driven by the projections and recesses of the at least one ring cam to slide within corresponding one of the cylinders; and low pressure valves and high pressure valves for supplying and discharging working oil to and from hydraulic chambers each defined by corresponding one of the cylinders and corresponding one of the pistons disposed in the cylinder.

A renewable energy power generating apparatus according to a second aspect of the present invention is defined in claim 6. In this apparatus, the stator part is disposed radially outside the rotor part. The at least one support part includes a first support part and a second support part. The first support part is disposed on a front region of the nacelle base plate which is adjacent to the hub. The first support part supports an end surface of a lower part of the stator part which is adjacent to the hub. The second support part is disposed on a rear region of the nacelle base plate which is remote from the hub. The second support part supports an end surface of an upper part of the stator part which is remote from the hub.

The moment load caused by the weight of the hub is applied to the first support part and the second support part supporting the stator part of the hydraulic pump fixed to the hub. Here, supporting the stator part of the hydraulic pump with the first support part and the second support part makes it possible to support the stator part of the hydraulic pump at two supporting points, which makes it possible to support the hydraulic pump more stably.

A renewable energy power generating apparatus according to a third aspect of the present invention is defined in claim 7. In this apparatus, the stator part is disposed radially outside the rotor part. The at least one support part is a tubular member which includes a bend portion extending from the nacelle base plate toward the hub to reach an end surface of the stator part which is adjacent to the hub so as to surround the hydraulic pump. The bend portion has a distal end connected to the end surface of the stator part adjacent to the hub. The tubular member includes an opening disposed on an outer side of a curved cross-sectional shape of the bend portion, the opening serving as the access passage.

The members, which require maintenance and produce pressurized oil, are incorporated in the stator part disposed radially outside the rotor part. On the other hand, the support part (tubular member) is surrounding the hydraulic pump. Thus, it is possible to access and perform maintenance on the stator part disposed radially outside of the rotor part from a space between the support part (tubular member) and the hydraulic pump. As a result, it is possible to complete maintenance of the hydraulic pump inside the support part (tubular member), depending on the contents of the maintenance work.

A renewable energy power generating apparatus according to a fourth aspect of the present invention is defined in claim 8. In this apparatus, the stator part is disposed radially outside the rotor part. The at least one support part is a tubular member which includes a bend portion extending from the nacelle base plate toward the hub to reach an end surface of the stator part which is remote from the hub. The bend portion has a distal end connected to the end surface of the stator part remote from the hub. The tubular member includes an opening disposed on an outer side of a curved cross-sectional shape of the bend portion, the opening serving as the access passage.

The members, which require maintenance and produce pressurized oil, are incorporated in the stator part disposed radially outside the rotor part. On the other hand, the distal end of the bend portion constituting a part of the support part is connected to the end surface of the stator part remote from the hub. Thus, the stator part of the hydraulic pump is disposed outside the support part (tubular member). As a result, it is possible to complete maintenance of the hydraulic pump outside the support part (tubular member), depending on the contents of the maintenance work.

In some embodiments, the rotor part includes a hollow part capable of accommodating at least one of a device, a cable, or a pipe in the nacelle, the hollow part being disposed inside the rotor part.

In this way, at least one of a device, a cable, or a pipe in the nacelle is accommodated inside the hollow part of the rotor part, which makes it possible to reduce the size of the nacelle, and to reduce the weight of the nacelle even further.

In some embodiments, the hollow part accommodates a slip ring for electrically connecting a stationary cable and a rotary cable which rotates with the rotor part.

In this way, a slip ring for electrically connecting a stationary cable and a rotary cable is disposed inside the hollow part of the stator part, which makes it possible to reduce the size of the nacelle, and to reduce the weight of the nacelle even further.

In some embodiments, the pressurized-oil generation mechanism includes: at least one ring cam disposed on an outer circumferential surface of the rotor part and configured to rotate with the rotor part, the at least one ring cam including a plurality of projections and recesses arranged in a circumferential direction; a plurality of cylinders disposed on a stator part side and arranged radially on an outer side of the at least one ring cam; a plurality of pistons each configured to be driven by the projections and recesses of the at least one ring cam to slide within respective one of the cylinders; and low pressure valves and high pressure valves for supplying and discharging working oil to and from hydraulic chambers each defined by corresponding one of the cylinders and corresponding one of the pistons disposed in the cylinder.

In some embodiments, the support part includes a cast formed integrally with the nacelle base plate. In this way, it is possible to reduce the manufacture cost of the support part.

In some embodiments, the renewable energy power generating apparatus is a wind turbine power generating apparatus which generates electric power in the generator by utilizing wind energy received by the at least one blade from wind serving as a renewable energy source.

### Advantageous Effects

According to the present invention, it is possible to provide a renewable energy power generating apparatus which has a great maintainability and whereby the weight of a nacelle can be reduced.

### BRIEF DESCRIPTION OF DRAWINGS

FIG. 1 is a schematic diagram of an overall configuration of a wind turbine power generating apparatus according to one embodiment of the present invention.
FIGs. 2A, 4A, 5A, 6A are each a perspective view of a configuration example of a hub, a hydraulic pump, and a support part of a wind turbine power generating apparatus according to one embodiment. FIGs. 2B, 4B, 5B, 6B are each a cross-sectional view of the hub, the hydraulic pump, and the support part of the wind turbine power generating apparatus taken from FIGs. 2A, 4A, 5A, and 6A, respectively.
FIGs. 3 and 7 are each a cross-sectional view of a hydraulic pump and its peripheral area taken in the radial direction of the hydraulic pump of the wind turbine power generating apparatus in FIGs. 2 and 6, respectively.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

Described below is a renewable energy power generating apparatus according to one embodiment. While a wind turbine power generating apparatus is described herein as an example of a renewable energy power generating apparatus, the shaft-system assembly method according to embodiments of the present invention may be applied to other renewable energy power generating apparatuses such as a tidal current power generating apparatus, an ocean current power generating apparatus, and a river current power generating apparatus.

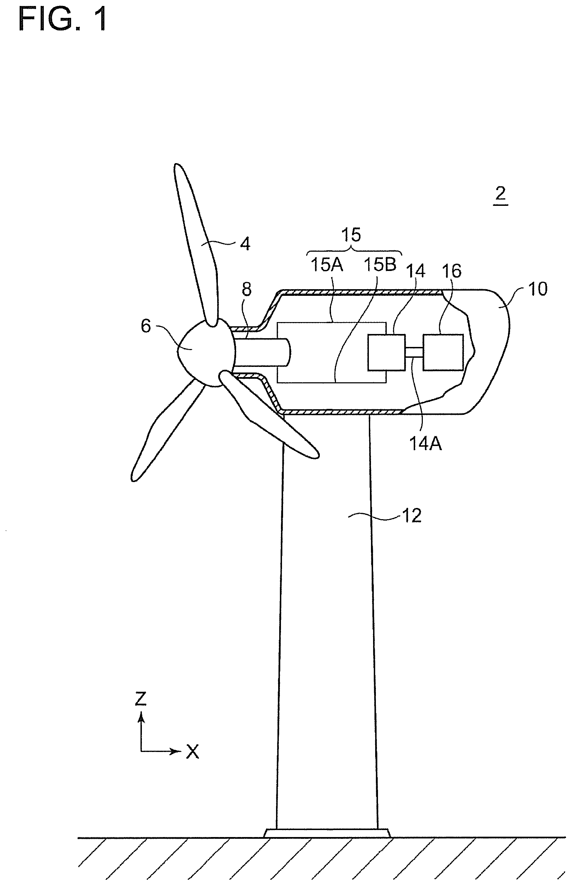

FIG. 1 is a schematic diagram of an overall configuration of a wind turbine power generating apparatus 2 according to one embodiment of the present invention. As illustrated in the drawing, the wind turbine power generating apparatus 2 includes at least one blade 4, a hub 6 to which the at least one blade 4 is attached, a nacelle 10, and a tower 12 for supporting the nacelle 10.

Further, the wind turbine power generating apparatus 2 includes a hydraulic pump 8 driven by the hub 6, a hydraulic motor 14, oil piping 15 disposed between the hydraulic pump 8 and the hydraulic motor 14, and a generator 16 connected to a rotation shaft 14A of the hydraulic motor 14 and driven by the hydraulic motor 14. The oil piping 15 includes a high pressure oil pipe 15A and a low pressure oil pipe 15B.

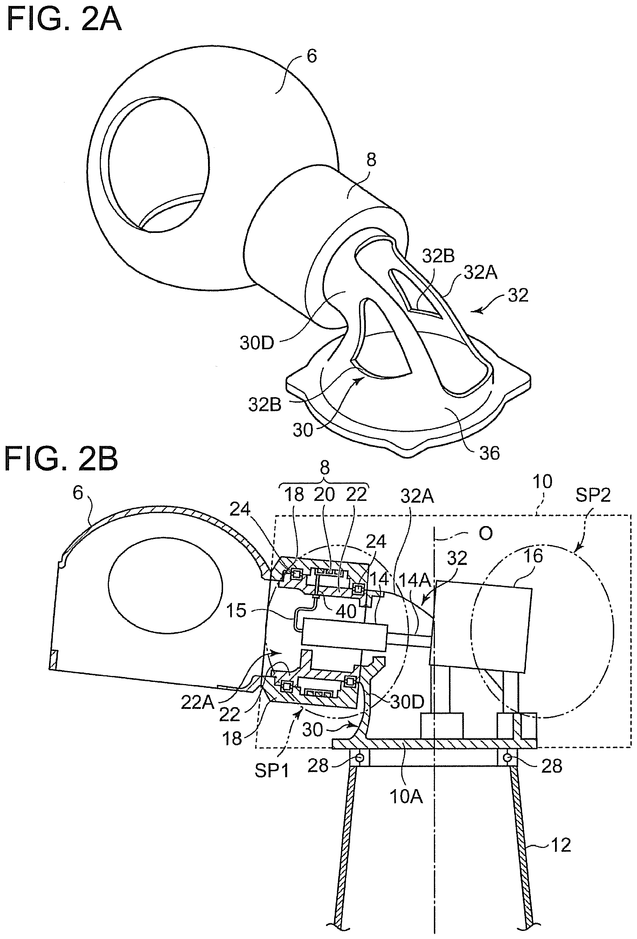

FIG. 2A is a perspective view of a configuration example of the hub 6, the hydraulic pump 8, and a support part 30 of the wind turbine power generating apparatus 2 according to one embodiment. FIG. 2B is a cross-sectional view of the hub 6, the hydraulic pump 8, and the support part 30 of the wind turbine power generating apparatus 2 taken from FIG. 2A.

As illustrated in FIG. 2B, the wind turbine power generating apparatus 2 according to one embodiment further includes a yaw rotation bearing 28 for rotatably supporting a nacelle base plate 10A of the nacelle 10 on the tower 12, and at least one support part 30 for supporting a stator part 22 of the hydraulic pump 8, which will be described below, on the nacelle base plate 10A of the nacelle 10.

The at least one support part 30 supports the stator part 22 on the nacelle base plate 10A so that the hydraulic pump 8 is disposed between the hub 6 and the center axis O of the yaw rotation bearing 28. Here, the nacelle base plate 10A is a member supporting a drivetrain part including the hydraulic pump 8 and other devices in the nacelle 10. The nacelle base plate 10A is connected to the tower 12 via the yaw rotation bearing 28.

The support part 30 includes an access passage 32 (32A, 32B) connecting the first space SP1 and the second space SP2. The first space SP1 is in the nacelle 10 and accommodates the hydraulic pump 8, while the second space SP2 is in the nacelle 10 and disposed on the opposite side of the support part 30 from the first space SP1. In this way, it is possible for a worker to access the first space SP1 via the access passage 32 (32A, 32B) from the second space SP2 in the nacelle 10 to perform maintenance on the hydraulic pump 8.

Here, the support part 30 may be disposed integrally with the nacelle base plate 10A. For instance, the support part 30 and the nacelle base plate 10A may be a cast formed as one piece.

The access passage 32 (32A, 32B) is disposed so as to connect the first space SP1 in the nacelle 10 and the second space SP2 in the nacelle 10. In one embodiment, as illustrated in FIGs. 2A and 2B, the access passage 32 includes an opening 32A disposed on a part of the support part 30 that faces the second space SP2, and openings 32B disposed on lateral sides of the support part 30 (opposite sides of a vertical plane including a rotational center axis of the hydraulic pump 8).

In another embodiment, the access passage 32 includes only the opening 32A disposed on a part of the support part 30 that faces the second space SP2. In this case, it is possible to reduce the opening area on the support part 30 and improve rigidity of the support part 30, without interrupting smooth transfer of a worker between the first space SP1 and the second space SP2.

In yet another embodiment, the access passage 32 includes only the openings 32B disposed on the lateral sides of the support part 30. In this case, no opening is disposed on a part that greatly affects the rigidity of the support part 30 against a moment load caused by the weight of the blade 4 and the hub 6, (which is a part of the support part 30 that faces the second space SP2). Thus, it is possible to improve rigidity of the support part 30.

Further, as illustrated in FIG. 2B, the hydraulic pump 8 includes a rotor part 18 fixed to the hub 6 so as to rotate with the hub 6, a pressurized-oil generation mechanism 20 configured to produce pressurized oil from rotation of the rotor part 18, and the stator part 22 forming a pump interior space that accommodates the pressurized-oil generation mechanism 20 with the rotor part 18. The hydraulic pump 8 also includes at least one pump bearing 24 disposed between the rotor part 18 and the stator part 22.

The rotor part 18 of the hydraulic pump 8 is supported to the nacelle base plate 10A so as to be rotatable, exclusively by the at least one pump bearing 24. In other words, the at least pump bearing 24 is the only bearing supporting the rotor part 18 rotatably.

In some embodiments, as illustrated in FIG. 2B, the rotor part 18 is supported to the nacelle base plate 10A exclusively by a pair of pump bearings 24. In a case where a plurality of bearings supports a rotation shaft, alignment operation is normally required for matching the axial centers of the respective bearings. In a typical wind turbine power generating apparatus where a pair of main bearings supports a main shaft rotating with a hub on a nacelle base plate, alignment is normally carried out for a pair of main bearings during installation of a shaft system onto a nacelle base plate. In view of this, if the rotor part 18 is to be supported to the nacelle base plate 10A exclusively by the pair of pump bearings 24 incorporated in the hydraulic pump 8, it would be possible to perform alignment on the pump bearings 24 in advance during assembly of the hydraulic pump 8 in a manufacturing plant. As a result, it is possible to dispense with alignment operation of bearings carried out at an installation site of the wind turbine power generating apparatus 2.

As illustrated in FIGs. 2A and 2B, in one embodiment, the stator part 22 is disposed radially inside the rotor part 18. The at least one support part 30 is a tubular member 36 that includes a bend portion 30D extending from the nacelle base plate 10A toward the hub 6. The bend portion 30D, which constitutes a part of the support part 30, has a distal end connected to an end of the stator part 22 that is remote from the hub 6. The support part 30 (tubular member 36) includes the opening 32A serving as the access passage 32 disposed on the outer side of the curved cross-sectional shape (see FIG. 2B) of the bend portion 30D. That is, the opening 32A is disposed on a part of the support part 30 that faces the second space SP2.

In this way, with the opening 32A serving as the access passage 32 disposed on the outer side of the curved cross-sectional shape of the bend portion 30D, it is possible for a maintenance worker to move in and out of the support part 30 (tubular member 36) via the access passage 32 more easily, which makes it possible to perform maintenance on the hydraulic pump 8 efficiently. Thus, the maintainability of the hydraulic pump 8 is improved.

Further, since the stator part 22 is disposed radially inside the rotor part 18, providing a hollow part 22A inside the stationary stator part 22 makes it possible to arrange objects in the hollow part 22A so that the arranged objects are supported on the stator part 22.

In one embodiment, the hollow part 22A inside the stationary stator part 22 accommodates at least one of a device, a cable, or a pipe in the nacelle 10. In another embodiment, the hollow part 22A inside the stator part 22 accommodates the hydraulic motor 14, which is one of the devices in the nacelle 10.

As illustrated in FIG. 2B, in one embodiment, the stator part 22 includes an internal flow channel 40 for supplying or discharging working oil to or from the pressurized-oil generation mechanism 20. The internal flow channel 40 extends from the pressurized-oil generation mechanism 20 radially inward. On the other hand, the hollow part 22A includes at least one length of the oil piping 15 (at least one of the high pressure oil pipe 15A or the low pressure oil pipe 15B) disposed between the hydraulic pump 8 and the at least one hydraulic motor 14 and connected to the internal flow channel 40 at one end. Here, while FIG. 2B only illustrates one pipe as the oil piping 15, the oil piping 15 may include two pipes that form the high pressure oil pipe 15A and the low pressure oil pipe 15B, respectively.

As described above, the oil piping 15 including the at least one pipe disposed between the hydraulic motor 14 and the hydraulic pump 8 is disposed inside the hollow part 22A of the stator part 22, which makes it possible to reduce the size of the nacelle 10 even further, and to further reduce the weight of the nacelle 10.

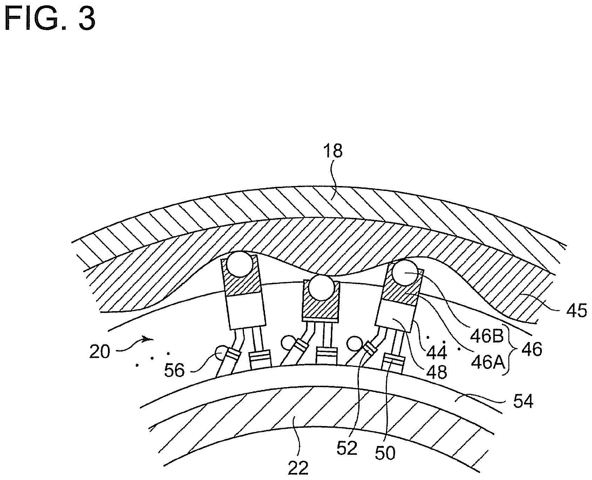

FIG. 3 is a cross-sectional view of a hydraulic pump 8 and its peripheral area taken in the radial direction of the hydraulic pump 8 of the wind turbine power generating apparatus 2 in FIG. 2. As illustrated in the drawing, the pressurized-oil generation mechanism 20 includes at least one ring cam 45, a plurality of cylinders 44, a plurality of pistons 46, low pressure valves 50, and high pressure valves 52.

The at least one ring cam 45 includes a plurality of projections and recesses arranged in the circumferential direction (i.e. lobe). The ring cam 45 is disposed on the inner circumferential surface of the rotor part 18 so as to rotate with the rotor part 18. The plurality of cylinders 44 are disposed on the stator part 22 side and arranged radially on the inner side of the at least one ring cam 45. Here, while each cylinder 44 is disposed in the radial direction of the ring cam 45, the center axis of each cylinder is slightly inclined from the radial direction in some embodiments.

The plurality of pistons 46 is driven by the projections and recesses of the at least one ring cam 45 and slides inside the respective cylinders 44. Each piston 46 includes a piston body 46A and a roller 46B. The low pressure valves 50 and the high pressure valves 52 each have a supply function and a discharge function, respectively, of working oil to and from a hydraulic chamber 48 defined by the corresponding cylinder 44 and the corresponding piston 46 disposed inside the cylinder 44. In some embodiments, the hydraulic chambers 48 are connected to the high pressure oil pipe 15A via respective high pressure communication channels 56, and to the low pressure oil pipe 15B via respective low pressure communication channels 54.

When the blade 4 receives wind, a lift applied to the blade 4 generates a component of moment about an X axis (torque), which has a function of rotating the blade 4. When the blade 4 rotates, the hub 6 to which the blade 4 is mounted also rotates (see FIG. 1).

Due to the rotation of the hub 6, the rotor part 18 of the hydraulic pump 8 attached to the hub 6 rotates (see FIG. 2B). Due to the rotation of the rotor part 18, the ring cam 45 attached to the inner circumferential surface of the rotor part 18 rotates (see FIG. 3).

Then, due to the rotation of the ring cam 45, the plurality of projections and recesses (lobe) of the ring cam 45 presses the rollers 46B of the pistons 46, so that the piston bodies 46A repeatedly reciprocate in the axial direction of the cylinders 44. Due to the reciprocating motion of the piston bodies 46A, the volume of each hydraulic chamber 48 formed by the corresponding piston body 46A and cylinder 44 is cyclically varied. When the volume of each hydraulic chamber 48 is reduced, the working oil in the hydraulic chamber 48 is compressed so that the compressed working oil is turned into high pressure oil and discharged to the high pressure oil pipe (compression stroke). When the volume of each hydraulic chamber 48 is increased, the working oil is suctioned into the hydraulic chamber 48 (intake stroke).

Once the high pressure oil is discharged into the high pressure oil pipe 15A, the high pressure oil is supplied to the hydraulic motor 14 via the high pressure oil pipe 15A. The hydraulic motor 14 is driven by the hydraulic pressure of the high pressure oil so that the rotation shaft 14A of the hydraulic motor 14 rotates. Rotation of the rotation shaft 14A of the hydraulic motor 14 transmits to the rotation shaft of the generator 16, and the rotation shaft of the generator 16 rotates. The generator 16 converts kinetic energy of its rotation shaft into electric energy, thereby generating electric power.

After performing work for the hydraulic motor 14, the high pressure oil has its pressure decreased and turns into low pressure oil. The low pressure oil is supplied to the hydraulic pump 8 from the hydraulic motor 14 via the low pressure oil pipe 15B. The low pressure oil supplied to the hydraulic pump 8 has it pressure increased again by the hydraulic pump 8 and turns into high pressure oil to be supplied again to the hydraulic motor 14.

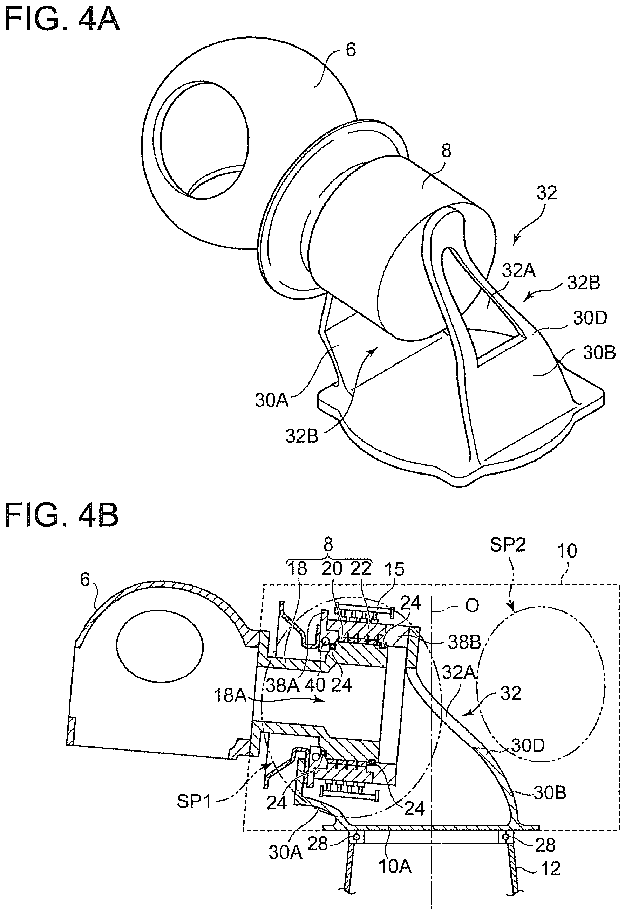

FIG. 4A is a perspective view of a configuration example of the hub 6, the hydraulic pump 8, and the support part 30 of the wind turbine power generating apparatus 2 according to one embodiment. FIG. 4B is a cross-sectional view of the hub 6, the hydraulic pump 8, and the support part 30 of the wind turbine power generating apparatus 2 taken from FIG. 4A.

As illustrated in FIGs. 4A and 4B, in one embodiment, the stator part 22 is disposed radially outside the rotor part 18. The at least one support part 30 includes the first support part 30A and the second support part 30B. The first support part 30A is disposed on a front region of the nacelle base plate 10A that is adjacent to the hub 6, so as to support an end surface of the lower part of the stator part 22 that is adjacent to the hub 6. The second support part 30B includes an opening 32A serving as the access passage 32. The second support part 30B is disposed on a rear region of the nacelle base plate 10A that is remote from the hub 6, so as to support an end surface of the upper part of the stator part 22 that is remote from the hub 6. In this way, the support part 30 supports the stator part 22 of the hydraulic pump 8 on the nacelle base plate 10A so that the hydraulic pump 8 is disposed between the hub 6 and the center axis O of the yaw rotation bearing 28. On the other hand, the rotor part 18 is supported so as to be rotatable on the nacelle base plate 10A side exclusively by the pump bearings 24.

Further, between the first support part 30A and the second support part 30B, no support part is disposed on the lateral sides of the hydraulic pump 8. Thus, a pair of passage spaces 32B is disposed on the opposite sides of the hydraulic pump 8, serving as the access passage 32. In this way, it is possible for a worker to move between the first space SP1 and the second space SP2 via the passage spaces 32B.

In another embodiment, the pair of passage spaces 32B alone is disposed as the access passage 32. In this case, it is possible to improve the rigidity of the second support part 30B while maintaining accessibility between the first space SP1 and the second space SP2 with the passage spaces 32B.

The moment load caused by the weight of the hub 6 is applied to the first support part 30A and the second support part 30B supporting the stator part 22 of the hydraulic pump 8 fixed to the hub 6. Here, supporting the stator part 22 of the hydraulic pump 8 with the first support part 30A and the second support part 30B makes it possible to support the stator part 22 of the hydraulic pump 8 at two supporting points, which makes it possible to support the hydraulic pump 8 more stably.

As illustrated in the drawing, a pair of first end plate 38A and second end plate 38B is disposed on the opposite ends of the stator part 22 so as to cover the outer circumferential surface of the pressurized-oil generation mechanism 20. The first end plate 38A adjacent to the hub 6 and the second end plate 38B remote from the hub 6 are each supported on the outer circumference of the rotor part 18 via corresponding one of the pump bearings 24. The first end plate 38A includes the internal flow channel 40 through which the high pressure oil produced in the hydraulic chambers 48 flows toward the high pressure oil pipe 15A. The internal flow channel 40 communicates with the hydraulic chambers 48 via the high pressure communication channels 56.

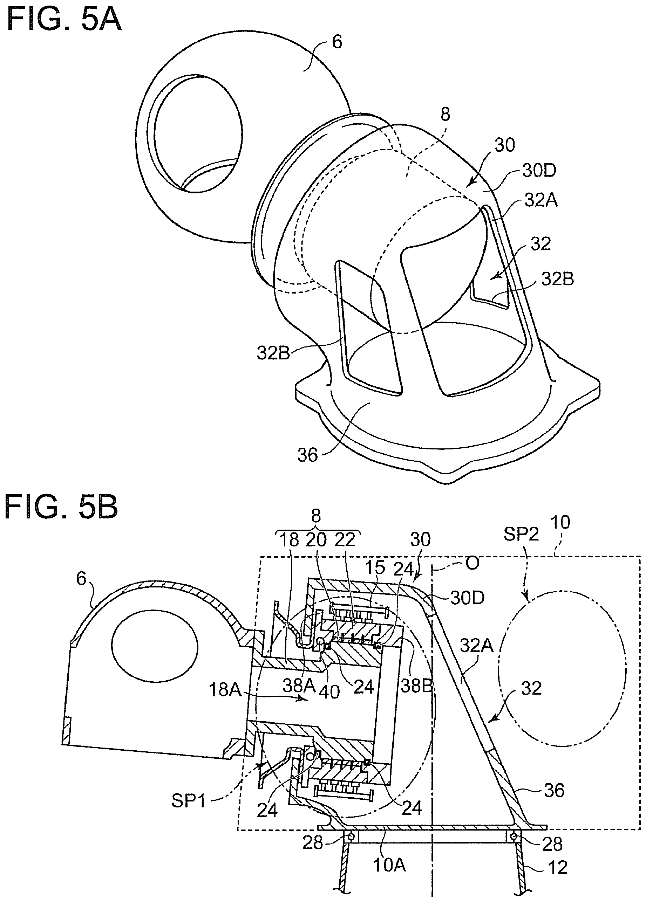

FIG. 5A is a perspective view of a configuration example of the hub 6, the hydraulic pump 8, and the support part 30 of the wind turbine power generating apparatus 2 according to one embodiment. FIG. 5B is a cross-sectional view of the hub 6, the hydraulic pump 8, and the support part 30 of the wind turbine power generating apparatus 2 taken from FIG. 5A.

As illustrated in FIGs. 5A and 5B, in one embodiment, the stator part 22 is disposed radially outside of the rotor part 18. The at least one support part 30 is a tubular member 36 including a bend portion 30D that extends from the nacelle base plate 10A toward the hub 6 to reach an end surface of the stator part 22 that is adjacent to the hub 6 so as to surround the hydraulic pump 8. The support part 30 supports the stator part 22 of the hydraulic pump 8 on the nacelle base plate 10A so that the hydraulic pump 8 is disposed between the hub 6 and the center axis O of the yaw rotation bearing 28. On the other hand, the rotor part 18 is supported so as to be rotatable on the nacelle base plate 10A side exclusively by the pump bearings 24.

The bend portion 30D constituting a part of the support part 30 has a distal end connected to an end surface of the stator part 22 that is adjacent to the hub 6, and the support part 30 (tubular member 36) includes an opening 32A serving as the access passage 32 disposed on the outer side of the curved cross-sectional shape of the bend portion 30D. Further, the lateral portions of the support part 30, which are portions on the opposite sides of the vertical plane including the rotational center axis of the hydraulic pump 8, also include a pair of openings 32A that serves as the access passage 32.

In another embodiment, the access passage 32 includes only the opening 32A disposed on a part of the support part 30 that faces the second space SP2. In this case, it is possible to reduce the opening area on the support part 30 to improve rigidity of the support part 30, without interrupting smooth transfer of a worker between the first space SP1 and the second space SP2.

In yet another embodiment, the access passage 32 includes only the openings 32B disposed on the lateral sides of the support part 30. In this case, no opening is disposed on a part that greatly affects rigidity of the support part 30 against a moment load caused by the weight of the blade 4 and the hub 6, which is a part of the support part 30 facing the second space SP2. Thus, it is possible to improve rigidity of the support part 30.

Maintenance needs to be performed on the constituent members for producing pressurized oil, such as valves like the low pressure valves 50 and the high pressure valves 52 and members including a sliding part like the pistons 46 and the cylinders 44. Such constituent members are normally incorporated in the stator part 22 of the hydraulic pump 8. In the present embodiment, the stator part 22 is disposed radially outside of the rotor part 18, and the support part 30 (tubular member 36) is surrounding the hydraulic pump 8. Thus, it is possible to access and perform maintenance on the constituent members requiring maintenance incorporated in the stator part 22 disposed radially outside of the rotor part 18 from a space between the support part 30 (tubular member 36) and the hydraulic pump 8. As a result, it is possible to complete maintenance of the hydraulic pump 8 inside the support part 30 (tubular member 36), depending on the contents of the maintenance work.

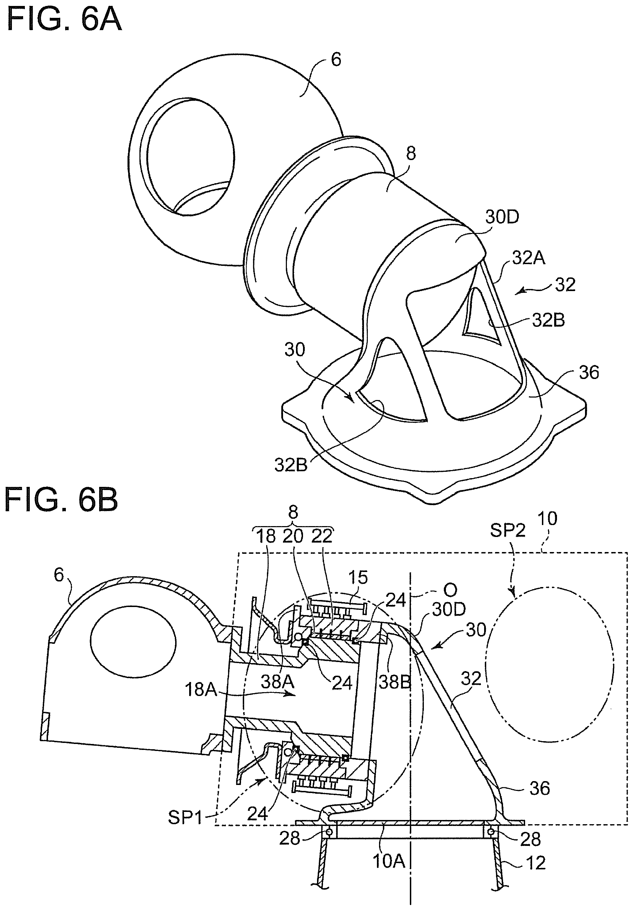

FIG. 6A is a perspective view of a configuration example of the hub 6, the hydraulic pump 8, and the support part 30 of the wind turbine power generating apparatus 2 according to one embodiment. FIG. 6B is a cross-sectional view of the hub 6, the hydraulic pump 8, and the support part 30 of the wind turbine power generating apparatus 2 taken from FIG. 6A.

As illustrated in FIGs. 6A and 6B, in one embodiment, the stator part 22 is disposed radially outside the rotor part 18. The at least one support part 30 is a tubular member 36 including a bend portion 30D that extends from the nacelle base plate 10A toward the hub 6 to reach an end surface of the stator part 22 that is remote from the hub 6. The support part 30 supports the stator part 22 of the hydraulic pump 8 on the nacelle base plate 10A so that the hydraulic pump 8 is disposed between the hub 6 and the center axis O of the yaw rotation bearing 28. On the other hand, the rotor part 18 is supported so as to be rotatable on the nacelle base plate 10A exclusively by the pump bearings 24.

The bend portion 30D constituting a part of the support part 30 has a distal end connected to an end surface of the stator part 22 that is remote from the hub 6, and the support part 30 (tubular member 36) includes an opening 32A serving as the access passage 32 disposed on the outer side of the curved cross-sectional shape of the bend portion 30D. Further, the lateral portions of the support part 30, which are portions on the opposite sides of the vertical plane including the rotational center axis of the hydraulic pump 8, also include a pair of openings 32A that serves as the access passage 32.

In another embodiment, the access passage 32 includes only the opening 32A disposed on a part of the support part 30 that faces the second space SP2. In this case, it is possible to reduce the opening area on the support part 30 to improve rigidity of the support part 30, without interrupting smooth transfer of a worker between the first space SP1 and the second space SP2.

In yet another embodiment, the access passage 32 includes only the openings 32B disposed on the lateral sides of the support part 30. In this case, no opening is disposed on a part that greatly affects rigidity of the support part 30 against a moment load caused by the weight of the blade 4 and the hub 6, which is a part of the support part 30 that faces the second space SP2. Thus, it is possible to improve rigidity of the support part 30.

Since the distal end of the bend portion 30D constituting a part of the support part 30 is connected to the end surface of the stator part 22 of the hydraulic pump 8 remote from the hub 6, the hydraulic pump 8 is disposed outside of the support part 30 (tubular member 36). As a result, it is possible to complete maintenance of the hydraulic pump 8 outside the support part 30 (tubular member 36), depending on the contents of the maintenance work (see FIG. 6A).

Furthermore, devices for controlling operation of the wind turbine power generating apparatus 2, which require maintenance, are disposed inside the support part 30 (tubular member 36). In this way, it is possible for a maintenance worker to enter the support part 30 (tubular member 36) via the access passage 32 disposed on the support part 30 (tubular member 36) to perform maintenance on the above devices.

Further, the rotor part 18 includes a hollow part 18A inside, and the hollow part 18A may accommodate at least one of a device, a cable or a pipe in the nacelle 10. Further, the hollow part 18A of the rotor part 18 may accommodate a slip ring (not illustrated) for electrically connecting the stationary cables and the rotary cables rotating with the rotor part 18.

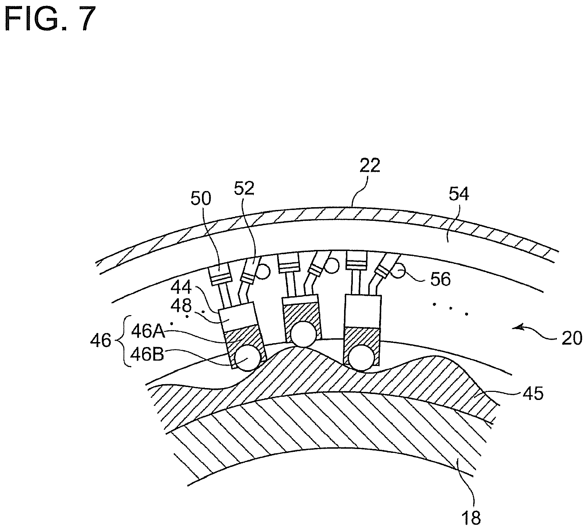

FIG. 7 is a cross-sectional view of a hydraulic pump 8 and its peripheral area along the radial direction of the hydraulic pump 8 of the wind turbine power generating apparatus 2 taken from FIG. 6. As illustrated in the drawing, the pressurized-oil generation mechanism 20 includes at least one ring cam 45, a plurality of cylinders 44, a plurality of pistons 46, low pressure valves 50 and high pressure valves 52. The at least one ring cam 45 includes a plurality of projections and recesses arranged in the circumferential direction (i.e. lobe). The ring cam 45 is disposed on the outer circumferential surface of the rotor part 18 so as to rotate with the rotor part 18. The plurality of cylinders 44 are disposed on the stator part 22 side and arranged radially on the outer side of the at least one ring cam 45.

The plurality of pistons 46 is driven by the projections and recesses of the at least one ring cam 45 and slides inside the respective cylinders 44. Each piston 46 includes a piston body 46A and a roller 46B. The low pressure valves 50 and the high pressure valves 52 each have a supply function and a discharge function, respectively, of working oil to and from a hydraulic chamber 48 defined by the corresponding cylinder 44 and the corresponding piston 46 disposed inside the cylinder 44. The hydraulic chambers 48 are connected to the high pressure oil pipe 15A via respective high pressure communication channels 56, and to the low pressure oil pipe 15B via respective low pressure communication channels 54.

When the blade 4 receives wind, the blade 4 rotates. The hub 6, to which the blade 4 is mounted, also rotates. When the hub 6 rotates, the rotor part 18 of the hydraulic pump 8 mounted to the hub 6 rotates, and thereby rotation of the rotor part 18 rotates the ring cam 45 mounted to the outer circumferential surface of the rotor part 18.

Then, due to the rotation of the ring cam 45, the plurality of projections and recesses of the ring cam 45 presses the rollers 46B, so that the piston bodies 46A repeatedly reciprocate in the axial direction of the cylinders 44.

Due to the reciprocating motion of the piston bodies 46A, the volume of each hydraulic chamber 48 is cyclically varied. When the volume of each hydraulic chamber 48 is reduced, the working oil in the hydraulic chamber 48 is compressed so that the compressed working oil turns into high pressure oil to be discharged to the high pressure oil pipe 15A. When the volume of each hydraulic chamber 48 is increased, the working oil is suctioned into the hydraulic chamber 48.

Once the high pressure oil is discharged into the high pressure oil pipe 15A, the high pressure oil is supplied to the hydraulic motor 14 via the high pressure oil pipe 15A. The hydraulic motor 14 is driven by the hydraulic pressure of the high pressure oil so that the rotation shaft 14A of the hydraulic motor 14 rotates. Rotation of the rotation shaft 14A of the hydraulic motor 14 transmits to the rotation shaft (not illustrated) of the generator 16, and the rotation shaft of the generator 16 rotates. The generator 16 converts the kinetic energy of its rotation shaft into electric energy, thereby generating electric power.

After performing work for the hydraulic motor 14, the high pressure oil has its pressure decreased and turns into low pressure oil. The low pressure oil is supplied to the hydraulic pump 8 from the hydraulic motor 14 via the low pressure oil pipe 15B. The low pressure oil supplied to the hydraulic pump 8 has its pressure increased again by the hydraulic pump 8 and turns into high pressure oil to be supplied again to the hydraulic motor 14.

As described above, in the above renewable energy power generating apparatus, the at least one pump bearing exclusively supports the rotor part 18 of the hydraulic pump 8 so as to be rotatable on the nacelle base plate 10A side. Thus, it is possible to shorten the shaft system for power transmission from the hub 6 to the hydraulic pump 8. Specifically, the shaft system of the above renewable energy power generating apparatus may be designed to be short as compared to a shaft system where the rotor part 18 is not exclusively supported to be rotatable by the pump bearing 24. As a result, it is possible to dispose the hydraulic pump 8 closer to the hub 6 as compared to a case where the rotor part 18 is not exclusively supported to be rotatable by the pump bearing 24, and between the hub 6 and the center axis O of the yaw rotation bearing 28. Such layout of the hydraulic pump 8 contributes to considerable reduction in the size and weight of the nacelle 10 housing the hydraulic pump 8.

Thus, in order to achieve the above layout of the hydraulic pump 8, in the above renewable energy power generating apparatus, the stator part 22 of the hydraulic pump 8 is supported on the nacelle base plate 10A by the at least one support part 30 so that the hydraulic pump 8 is disposed between the hub 6 and the center axis O of the yaw rotation bearing 28. Here, the at least one support part 30 includes the access passage 32, which makes it possible for a worker or a component to transfer between the first space and the second space in the nacelle 10 via the access passage 32. Thus, it is possible to reduce the weight of the nacelle 10 while ensuring maintainability.

Embodiments of the present invention were described in detail above, but the present invention is not limited thereto, and various amendments and modifications may be implemented within a scope that does not depart from the present invention, as defined by the appended claims. For instance, the above embodiments may be suitably combined.

### Reference Signs List

2 Wind turbine power generating apparatus (Renewable energy power generating apparatus)
4 Blade
6 Hub
8 Hydraulic pump
10 Nacelle
10A Nacelle base plate
12 Tower
14 Hydraulic motor
14A Rotation shaft
15 Oil piping
15A High pressure oil pipe
15B Low pressure oil pipe
16 Generator
18 Rotor part
18A Hollow part
20 Pressurized-oil generation part
22 Stator part
22A Hollow part
24 Pump bearings
28 Yaw rotation bearing
30 Support part
30A First support part
30B Second support part
30D Bend portion
32 Access passage
36 Tubular member
38A First end plate
38B Second end plate
40 Internal flow channel
44 Cylinder
45 Ring cam
46 Piston
46A Piston body
46B Roller
48 Hydraulic chambers
50 Low pressure valve
52 High pressure valve
54 Low pressure communication channel
56 High pressure communication channel
O Center axis
SP1 First space
SP2 Second space

## Claims

1. A renewable energy power generating apparatus (2),comprising:
at least one blade (4);
a hub (6) to which the at least one blade (4) is mounted;
a hydraulic pump (8) including a rotor part (18) fixed to the hub (6) and configured to rotate with the hub (6), a pressurized-oil generation mechanism (20) configured to produce pressurized oil by rotation of the rotor part (18), a stator part (22) which forms a pump interior space for accommodating the pressurized-oil generation mechanism (20) with the rotor part (18), and at least one pump bearing (24) disposed between the rotor part (18) and the stator part (22);
a nacelle (10) for housing at least the hydraulic pump (8);
a tower (12) for supporting the nacelle (10);
a yaw rotation bearing (28) for rotatably supporting a nacelle base plate (10A) of the nacelle (10) on the tower (12);
at least one support part (30) for supporting the stator part (22) of the hydraulic pump (8) on the nacelle base plate (10A) of the nacelle (10);
at least one hydraulic motor (14) configured to be driven by the pressurized oil produced by the pressurized-oil generation mechanism (20); and
a generator (16) configured to be driven by the at least one hydraulic motor (14),
wherein the rotor part (18) is supported to the nacelle base plate (10A) exclusively by the at least one pump bearing (24) so as to be rotatable,
wherein the at least one support part (30) is configured to support the stator part (22) on the nacelle base plate (10A) so that the hydraulic pump (8) is disposed between the hub (6) and a center axis of the yaw rotation bearing (28), and
wherein the at least one support part (30) includes an access passage (32) for connecting a first space and a second space, the first space being disposed in the nacelle (10) and accommodating the hydraulic pump (8), and the second space being disposed in the nacelle (10) and at an opposite side of the at least one support part (30) from the first space, the renewable energy power generating apparatus (2) being **characterized in that**:
the stator part (22) is disposed radially inside the rotor part (18),
the at least one support part (30) is a tubular member (36) including a bend portion (30D) which extends from the nacelle base plate (10A) toward the hub (6),
the bend portion (30D) has a distal end connected to the end of the stator part (22) which is remote from the hub (6), and
the tubular member (36) includes an opening disposed on an outer side of a curved cross-sectional shape of the bend portion (30D), the opening serving as the access passage (32).

2. The renewable energy power generating apparatus (2) according to claim 1,
wherein the stator part (22) includes a hollow part (18A) capable of accommodating at least one of a device, a cable, or a pipe in the nacelle (10), the hollow part (18A) being disposed inside the stator part (22).

3. The renewable energy power generating apparatus (2) according to claim 2,
wherein the at least one hydraulic motor (14) is disposed in the hollow part (18A) of the stator part (22).

4. The renewable energy power generating apparatus (2) according to claim 3,
wherein the stator part (22) includes an inner flow channel (40) for supplying or discharging working oil to or from the pressurized-oil generation mechanism (20), the inner flow channel (40) extending radially inward from the pressurized-oil generation mechanism (20), and
wherein an oil pipe (15) for transferring the working oil is disposed in the hollow part (18A) and between the hydraulic pump (8) and the at least one hydraulic motor (14), the oil pipe (15) having an end connected to the inner flow channel (40).

5. The renewable energy power generating apparatus (2) according to any one of claims 1 to 4,
wherein the pressurized-oil generation mechanism (20) includes:
at least one ring cam (45) disposed on an inner circumferential surface of the rotor part (18) and configured to rotate with the rotor part (18), the at least one ring cam (45) including a plurality of projections and recesses arranged in a circumferential direction;
a plurality of cylinders (44) disposed on a stator part side and arranged radially on an inner side of the at least one ring cam (45);
a plurality of pistons (46) each configured to be driven by the projections and recesses of the at least one ring cam (45) to slide within corresponding one of the cylinders (44); and
low pressure valves (50) and high pressure valves (52) for supplying and discharging working oil to and from hydraulic chambers (48) each defined by corresponding one of the cylinders (44) and corresponding one of the pistons (46) disposed in the cylinder (44).

6. A renewable energy power generating apparatus (2)comprising:
at least one blade (4);
a hub (6) to which the at least one blade (4) is mounted;
a hydraulic pump (8) including a rotor part (18) fixed to the hub (6) and configured to rotate with the hub (6), a pressurized-oil generation mechanism (20) configured to produce pressurized oil by rotation of the rotor part (18), a stator part (22) which forms a pump interior space for accommodating the pressurized-oil generation mechanism (20) with the rotor part (18), and at least one pump bearing (24) disposed between the rotor part (18) and the stator part (22);
a nacelle (10) for housing at least the hydraulic pump (8);
a tower (12) for supporting the nacelle (10);
a yaw rotation bearing (28) for rotatably supporting a nacelle base plate (10A) of the nacelle (10) on the tower (12);
at least one support part (30) for supporting the stator part (22) of the hydraulic pump (8) on the nacelle base plate (10A) of the nacelle (10);
at least one hydraulic motor (14) configured to be driven by the pressurized oil produced by the pressurized-oil generation mechanism (20); and
a generator (16) configured to be driven by the at least one hydraulic motor (14),
wherein the rotor part (18) is supported to the nacelle base plate (10A) exclusively by the at least one pump bearing (24) so as to be rotatable,
wherein the at least one support part (30) is configured to support the stator part (22) on the nacelle base plate (10A) so that the hydraulic pump (8) is disposed between the hub (6) and a center axis of the yaw rotation bearing (28), and
wherein the at least one support part (30) includes an access passage (32) for connecting a first space and a second space, the first space being disposed in the nacelle (10) and accommodating the hydraulic pump (8), and the second space being disposed in the nacelle (10) and at an opposite side of the at least one support part (30) from the first space, the renewable energy power generating apparatus (2) being **characterized in that**:
the stator part (22) is disposed radially outside of the rotor part (18), and
the at least one support part (30) includes a first support part (30A) and a second support part (30B), the first support part (30A) being disposed on a front region of the nacelle base plate (10A) which is adjacent to the hub (6) and supporting an end surface of a lower part of the stator part (22) which is adjacent to the hub (6), and the second support part (30B) being disposed on a rear region of the nacelle base plate (10A) which is remote from the hub (6) and supporting an end surface of an upper part of the stator part (22) which is remote from the hub (6).

7. A renewable energy power generating apparatus (2) comprising:
at least one blade (4);
a hub (6) to which the at least one blade (4) is mounted;
a hydraulic pump (8) including a rotor part (18) fixed to the hub (6) and configured to rotate with the hub (6), a pressurized-oil generation mechanism (20) configured to produce pressurized oil by rotation of the rotor part (18), a stator part (22) which forms a pump interior space for accommodating the pressurized-oil generation mechanism (20) with the rotor part (18), and at least one pump bearing (24) disposed between the rotor part (18) and the stator part (22);
a nacelle (10) for housing at least the hydraulic pump (8);
a tower (12) for supporting the nacelle (10);
a yaw rotation bearing (28) for rotatably supporting a nacelle base plate (10A) of the nacelle (10) on the tower (12);
at least one support part (30) for supporting the stator part (22) of the hydraulic pump (8) on the nacelle base plate (10A) of the nacelle (10);
at least one hydraulic motor (14) configured to be driven by the pressurized oil produced by the pressurized-oil generation mechanism (20); and
a generator (16) configured to be driven by the at least one hydraulic motor (14),
wherein the rotor part (18) is supported to the nacelle base plate (10A) exclusively by the at least one pump bearing (24) so as to be rotatable,
wherein the at least one support part (30) is configured to support the stator part (22) on the nacelle base plate (10A) so that the hydraulic pump (8) is disposed between the hub (6) and a center axis of the yaw rotation bearing (28), and
wherein the at least one support part (30) includes an access passage (32) for connecting a first space and a second space, the first space being disposed in the nacelle (10) and accommodating the hydraulic pump (8), and the second space being disposed in the nacelle (10) and at an opposite side of the at least one support part (30) from the first space, the renewable energy power generating apparatus (2) being **characterized in that**:
the stator part (22) is disposed radially outside of the rotor part (18), and
the at least one support part (30) is a tubular member (36) including a bend portion (30D) which extends from the nacelle base plate (10A) toward the hub (6) to reach an end surface of the stator part (22) which is adjacent to the hub (6) so as to surround the hydraulic pump (8),
the bend portion (30D) has a distal end connected to the end surface of the stator part (22) adjacent to the hub (6), and
the tubular member (36) includes an opening disposed on an outer side of a curved cross-sectional shape of the bend portion (30D), the opening serving as the access passage (32).

8. A renewable energy power generating apparatus (2) comprising:
at least one blade (4);
a hub (6) to which the at least one blade (4) is mounted;
a hydraulic pump (8) including a rotor part (18) fixed to the hub (6) and configured to rotate with the hub (6), a pressurized-oil generation mechanism (20) configured to produce pressurized oil by rotation of the rotor part (18), a stator part (22) which forms a pump interior space for accommodating the pressurized-oil generation mechanism (20) with the rotor part (18), and at least one pump bearing (24) disposed between the rotor part (18) and the stator part (22);
a nacelle (10) for housing at least the hydraulic pump (8);
a tower (12) for supporting the nacelle (10);
a yaw rotation bearing (28) for rotatably supporting a nacelle base plate (10A) of the nacelle (10) on the tower (12);
at least one support part (30) for supporting the stator part (22) of the hydraulic pump (8) on the nacelle base plate (10A) of the nacelle (10);
at least one hydraulic motor (14) configured to be driven by the pressurized oil produced by the pressurized-oil generation mechanism (20); and
a generator (16) configured to be driven by the at least one hydraulic motor (14),
wherein the rotor part (18) is supported to the nacelle base plate (10A) exclusively by the at least one pump bearing (24) so as to be rotatable,
wherein the at least one support part (30) is configured to support the stator part (22) on the nacelle base plate (10A) so that the hydraulic pump (8) is disposed between the hub (6) and a center axis of the yaw rotation bearing (28), and
wherein the at least one support part (30) includes an access passage (32) for connecting a first space and a second space, the first space being disposed in the nacelle (10) and accommodating the hydraulic pump (8), and the second space being disposed in the nacelle (10) and at an opposite side of the at least one support part (30) from the first space, the renewable energy power generating apparatus (2) being **characterized in that**:
the stator part (22) is disposed radially outside of the rotor part, (18) and
the at least one support part (30) is a tubular member (36) including a bend portion (30D) which extends from the nacelle base plate (10A) toward the hub (6) to reach an end surface of the stator part (22) which is remote from the hub (6),
the bend portion (30D) has a distal end connected to an end surface of the stator part (22) which is remote from the hub (6), and
the tubular member (36) includes an opening disposed on an outer side of a curved cross-sectional shape of the bend portion (30D), the opening serving as the access passage (32).

9. The renewable energy power generating apparatus (2) according to any one of claims 6 to 8,
wherein the rotor part (18) includes a hollow part (18A) capable of accommodating at least one of a device, a cable, or a pipe in the nacelle (10), the hollow part (18A) being disposed inside the rotor part (18).

10. The renewable energy power generating apparatus (2) according to claim 9,
wherein the hollow part (18A) accommodates a slip ring for electrically connecting a stationary cable and a rotary cable which rotates with the rotor part (18).

11. The renewable energy power generating apparatus (2) according to any one of claims 6 to 10,
wherein the pressurized-oil generation mechanism (20) includes:
at least one ring cam (45) disposed on an outer circumferential surface of the rotor part (18) and configured to rotate with the rotor part, the at least one ring cam (45) including a plurality of projections and recesses arranged in a circumferential direction;
a plurality of cylinders (44) disposed on a stator part side and arranged radially on an outer side of the at least one ring cam (45);
a plurality of pistons (46) each configured to be driven by the projections and recesses of the at least one ring cam (45) to slide within respective one of the cylinders (44); and
low pressure valves (50) and high pressure valves (52) for supplying and discharging working oil to and from hydraulic chambers (48) each defined by corresponding one of the cylinders (44) and corresponding one of the pistons (46) disposed in the cylinder (44).

12. The renewable energy power generating apparatus (2) according to any one of claims 1 to 11,
wherein the support part (30) includes a cast formed integrally with the nacelle base plate (10A) .

13. The renewable energy power generating apparatus (2) according to any one of claims 1 to 12,
wherein the renewable energy power generating apparatus (2) is a wind turbine power generating apparatus which generates electric power in the generator by utilizing wind energy received by at least one blade (4) from wind serving as a renewable energy source.

## Patentansprüche

1. Vorrichtung (2) zur Stromerzeugung aus erneuerbarer Energie, umfassend:
mindestens einen Flügel (4),
eine Nabe (6), an die der mindestens eine Flügel (4) montiert ist,
eine Hydraulikpumpe (8), die ein Rotorelement (18), das an der Nabe (6) befestigt und dazu ausgestaltet ist, mit der Nabe (6) zu rotieren, einen Mechanismus (20) zur Erzeugung druckbeaufschlagten Öls, der dazu ausgestaltet ist, druckbeaufschlagtes Öl durch Rotation des Rotorelements (18) zu erzeugen, ein Statorelement (22), das einen Pumpeninnenraum zum Aufnehmen des Mechanismus (20) zur Erzeugung druckbeaufschlagten Öls mit dem Rotorelement (18) bildet, und mindestens ein Pumpenlager (24), das zwischen dem Rotorelement (18) und dem Statorelement (22) angeordnet ist, enthält,
eine Gondel (10) zum Unterbringen mindestens der Hydraulikpumpe (8),
einen Turm (12) zum Tragen der Gondel (10),
ein Turmdrehlager (28) zum drehbaren Tragen einer Gondelbasisplatte (10A) der Gondel (10) auf dem Turm (12),
mindestens ein Trägerelement (30) zum Tragen des Statorelements (22) der Hydraulikpumpe (8) auf der Gondelbasisplatte (10A) der Gondel (10),
mindestens einen Hydraulikmotor (14), der dazu ausgestaltet ist, durch das druckbeaufschlagte Öl, das durch den Mechanismus (20) zur Erzeugung druckbeaufschlagten Öls erzeugt wird, angetrieben zu werden, und
einen Generator (16), der dazu ausgestaltet ist, durch den mindestens einen Hydraulikmotor (14) angetrieben zu werden,
wobei das Rotorelement (18) ausschließlich durch das mindestens eine Pumpenlager (24) an die Gondelbasisplatte (10A) befestigt ist, so dass es drehbar ist,
wobei das mindestens eine Trägerelement (30) dazu ausgestaltet ist, das Statorelement (22) auf der Gondelbasisplatte (10A) zu tragen, so dass die Hydraulikpumpe (8) zwischen der Nabe (6) und einer Mittelachse des Turmdrehlagers (28) angeordnet ist, und
wobei das mindestens eine Trägerelement (30) einen Zugangsdurchgang (32) zum Verbinden eines ersten Raums und eines zweiten Raums enthält, wobei der erste Raum in der Gondel (10) angeordnet ist und die Hydraulikpumpe (8) aufnimmt und der zweite Raum in der Gondel (10) und auf einer gegenüberliegenden Seite des mindestens einen Trägerelements (30) von dem ersten Raum angeordnet ist, wobei die Vorrichtung (2) zur Stromerzeugung aus erneuerbarer Energie **dadurch gekennzeichnet ist, dass**:
das Statorelement (22) radial innerhalb des Rotorelements (18) angeordnet ist,
das mindestens eine Trägerelement (30) ein rohrförmiges Bauteil (36) ist, das einen gebogenen Abschnitt (30D) enthält, der sich von der Gondelbasisplatte (10A) zur Nabe (6) hin erstreckt,
der gebogene Abschnitt (30D) ein distales Ende aufweist, das mit dem Ende des Statorelements (22) verbunden ist, das entfernt von der Nabe (6) liegt, und
das rohrförmige Bauteil (36) eine Öffnung enthält, die an einer Außenseite einer im Querschnitt gekrümmten Form des gebogenen Abschnitts (30D) angeordnet ist, wobei die Öffnung als der Zugangsdurchgang (32) dient.

2. Vorrichtung (2) zur Stromerzeugung aus erneuerbarer Energie nach Anspruch 1,
wobei das Statorelement (22) einen hohlen Teil (18A) enthält, der geeignet ist, um mindestens eines von einer Vorrichtung, einem Kabel oder einem Rohr in der Gondel (10) aufzunehmen, wobei der hohle Teil (18A) innerhalb des Statorelements (22) angeordnet ist.

3. Vorrichtung (2) zur Stromerzeugung aus erneuerbarer Energie nach Anspruch 2,
wobei der mindestens eine Hydraulikmotor (14) in dem hohlen Teil (18A) des Statorelements (22) angeordnet ist.

4. Vorrichtung (2) zur Stromerzeugung aus erneuerbarer Energie nach Anspruch 3,
wobei das Statorelement (22) einen inneren Strömungskanal (40) zum Zuführen oder Ablassen von Betriebsöl zu dem bzw. von dem Mechanismus (20) zur Erzeugung druckbeaufschlagten Öls umfasst, wobei sich der innere Strömungskanal (40) radial nach innen von dem Mechanismus (20) zur Erzeugung druckbeaufschlagten Öls erstreckt, und
wobei ein Ölrohr (15) zum Weiterleiten des Betriebsöls in dem hohlen Teil (18A) und zwischen der Hydraulikpumpe (8) und dem mindestens einen Hydraulikmotor (14) angeordnet ist, wobei das Ölrohr (15) ein Ende aufweist, das mit dem inneren Strömungskanal (40) verbunden ist.

5. Vorrichtung (2) zur Stromerzeugung aus erneuerbarer Energie nach einem der Ansprüche 1 bis 4,
wobei der Mechanismus (20) zur Erzeugung druckbeaufschlagten Öls enthält:
mindestens einen Nockenring (45), der an einer inneren Umfangsfläche des Rotorelements (18) angeordnet und dazu ausgestaltet ist, mit dem Rotorelement (18) zu rotieren, wobei der mindestens eine Nockenring (45) eine Mehrzahl von Vorsprüngen und Aussparungen enthält, die in einer Umfangsrichtung angeordnet sind,
eine Mehrzahl von Zylindern (44), die an einer Statorelementseite angeordnet sind und radial an einer Innenseite des mindestens einen Nockenrings (45) angeordnet sind,
eine Mehrzahl von Kolben (46), von denen jeder dazu ausgestaltet ist, durch die Vorsprünge und Aussparungen des mindestens einen Nockenrings (45) angetrieben zu werden, um in einem entsprechenden der Zylinder (44) zu gleiten, und
Niederdruckventile (50) und Hochdruckventile (52) zum Zuführen und Ablassen von Betriebsöl zu bzw. von Hydraulikkammern (48), von denen jede durch einen entsprechenden der Zylinder (44) und einen entsprechenden der Kolben (46), die im Zylinder (44) angeordnet sind, definiert ist.

6. Vorrichtung (2) zur Stromerzeugung aus erneuerbarer Energie, umfassend:
mindestens einen Flügel (4),
eine Nabe (6), an die der mindestens eine Flügel (4) montiert ist,
eine Hydraulikpumpe (8), die ein Rotorelement (18), das an der Nabe (6) befestigt und ausgestaltet ist, mit der Nabe (6) zu rotieren, einen Mechanismus (20) zur Erzeugung druckbeaufschlagten Öls, der dazu ausgestaltet ist, druckbeaufschlagtes Öl durch Rotation des Rotorelements (18) zu erzeugen, ein Statorelement (22), das einen Pumpeninnenraum zum Aufnehmen des Mechanismus (20) zur Erzeugung druckbeaufschlagten Öls mit dem Rotorelement (18) bildet, und mindestens ein Pumpenlager (24), das zwischen dem Rotorelement (18) und dem Statorelement (22) angeordnet ist, enthält,
eine Gondel (10) zum Unterbringen mindestens der Hydraulikpumpe (8),
einen Turm (12) zum Tragen der Gondel (10),
ein Turmdrehlager (28) zum drehbaren Tragen einer Gondelbasisplatte (10A) der Gondel (10) auf dem Turm (12),
mindestens ein Trägerelement (30) zum Tragen des Statorelements (22) der Hydraulikpumpe (8) auf der Gondelbasisplatte (10A) der Gondel (10),
mindestens einen Hydraulikmotor (14), der dazu ausgestaltet ist, durch das druckbeaufschlagte Öl, das durch den Mechanismus (20) zur Erzeugung druckbeaufschlagten Öls erzeugt wird, angetrieben zu werden, und
einen Generator (16), der dazu ausgestaltet ist, durch den mindestens einen Hydraulikmotor (14) angetrieben zu werden,
wobei das Rotorelement (18) ausschließlich durch das mindestens eine Pumpenlager (24) an die Gondelbasisplatte (10A) befestigt ist, so dass es drehbar ist,
wobei das mindestens eine Trägerelement (30) dazu ausgestaltet ist, das Statorelement (22) auf der Gondelbasisplatte (10A) zu tragen, so dass die Hydraulikpumpe (8) zwischen der Nabe (6) und einer Mittelachse des Turmdrehlagers (28) angeordnet ist, und
wobei das mindestens eine Trägerelement (30) einen Zugangsdurchgang (32) zum Verbinden eines ersten Raums und eines zweiten Raums enthält, wobei der erste Raum in der Gondel (10) angeordnet ist und die Hydraulikpumpe (8) aufnimmt und der zweite Raum in der Gondel (10) und auf einer gegenüberliegenden Seite des mindestens einen Trägerelements (30) von dem ersten Raum angeordnet ist, wobei die Vorrichtung (2) zur Stromerzeugung aus erneuerbarer Energie **dadurch gekennzeichnet ist, dass**:
das Statorelement (22) radial außerhalb des Rotorelements (18) angeordnet ist, und
das mindestens eine Trägerelement (30) einen ersten Trägerteil (30A) und einen zweiten Trägerteil (30B) enthält, wobei der erste Trägerteil (30A) in einem vorderen Bereich der Gondelbasisplatte (10A), der an die Nabe (6) anschließt, angeordnet ist und eine Endfläche eines unteren Teils des Statorelements (22), der an die Nabe (6) anschließt, trägt, und der zweite Trägerteil (30B) in einem hinteren Bereich der Gondelbasisplatte (10A), der von der Nabe (6) entfernt liegt, angeordnet ist und eine Endfläche eines unteren Teils des Statorelements (22), der von der Nabe (6) entfernt liegt, trägt.

7. Vorrichtung (2) zur Stromerzeugung aus erneuerbarer Energie, umfassend:
mindestens einen Flügel (4),
eine Nabe (6), an die der mindestens eine Flügel (4) montiert ist,
eine Hydraulikpumpe (8), die ein Rotorelement (18), das an der Nabe (6) befestigt und dazu ausgestaltet ist, mit der Nabe (6) zu rotieren, einen Mechanismus (20) zur Erzeugung druckbeaufschlagten Öls, der dazu ausgestaltet ist, druckbeaufschlagtes Öl durch Rotation des Rotorelements (18) zu erzeugen, ein Statorelement (22), das einen Pumpeninnenraum zum Aufnehmen des Mechanismus (20) zur Erzeugung druckbeaufschlagten Öls mit dem Rotorelement (18) bildet, und mindestens ein Pumpenlager (24), das zwischen dem Rotorelement (18) und dem Statorelement (22) angeordnet ist, enthält,
eine Gondel (10) zum Unterbringen mindestens der Hydraulikpumpe (8),
einen Turm (12) zum Tragen der Gondel (10),
ein Turmdrehlager (28) zum drehbaren Tragen einer Gondelbasisplatte (10A) der Gondel (10) auf dem Turm (12),
mindestens ein Trägerelement (30) zum Tragen des Statorelements (22) der Hydraulikpumpe (8) auf der Gondelbasisplatte (10A) der Gondel (10),
mindestens einen Hydraulikmotor (14), der dazu ausgestaltet ist, durch das druckbeaufschlagte Öl, das durch den Mechanismus (20) zur Erzeugung druckbeaufschlagten Öls erzeugt wird, angetrieben zu werden, und
einen Generator (16), der dazu ausgestaltet ist, durch den mindestens einen Hydraulikmotor (14) angetrieben zu werden,
wobei das Rotorelement (18) ausschließlich durch das mindestens eine Pumpenlager (24) an die Gondelbasisplatte (10A) befestigt ist, so dass es drehbar ist,
wobei das mindestens eine Trägerelement (30) dazu ausgestaltet ist, das Statorelement (22) auf der Gondelbasisplatte (10A) zu tragen, so dass die Hydraulikpumpe (8) zwischen der Nabe (6) und einer Mittelachse des Turmdrehlagers (28) angeordnet ist, und
wobei das mindestens eine Trägerelement (30) einen Zugangsdurchgang (32) zum Verbinden eines ersten Raums und eines zweiten Raums enthält, wobei der erste Raum in der Gondel (10) angeordnet ist und die Hydraulikpumpe (8) aufnimmt und der zweite Raum in der Gondel (10) und auf einer gegenüberliegenden Seite des mindestens einen Trägerelements (30) von dem ersten Raum angeordnet ist, wobei die Anlage zur Stromerzeugung aus erneuerbarer Energie (2) **dadurch gekennzeichnet ist, dass**:
das Statorelement (22) radial außerhalb des Rotorelements (18) angeordnet ist, und
das mindestens eine Trägerelement (30) ein rohrförmiges Bauteil (36) ist, das einen gebogenen Abschnitt (30D) enthält, der sich von der Gondelbasisplatte (10A) zur Nabe (6) hin erstreckt, um eine Endfläche des Statorelements (22), das an die Nabe (6) anschließt, zu erreichen, um dadurch die Hydraulikpumpe (8) zu umgeben,
wobei der gebogene Abschnitt (30D) ein distales Ende aufweist, das mit dem Endfläche des Statorelements (22) verbunden ist, das an die Nabe (6) anschließt, und
das rohrförmige Bauteil (36) eine Öffnung enthält, die an einer Außenseite einer im Querschnitt gekrümmten Form des gebogenen Abschnitts (30D) angeordnet ist, wobei die Öffnung als der Zugangsdurchgang (32) dient.

8. Vorrichtung (2) zur Stromerzeugung aus erneuerbarer Energie, umfassend:
mindestens einen Flügel (4),
eine Nabe (6), an die der mindestens eine Flügel (4) montiert ist,
eine Hydraulikpumpe (8), die ein Rotorelement (18), das an der Nabe (6) befestigt und dazu ausgestaltet ist, mit der Nabe (6) zu rotieren, einen Mechanismus (20) zur Erzeugung druckbeaufschlagten Öls, der dazu ausgestaltet ist, druckbeaufschlagtes Öl durch Rotation des Rotorelements (18) zu erzeugen, ein Statorelement (22), das einen Pumpeninnenraum zum Aufnehmen des Mechanismus (20) zur Erzeugung druckbeaufschlagten Öls mit dem Rotorelement (18) bildet, und mindestens ein Pumpenlager (24), das zwischen dem Rotorelement (18) und dem Statorelement (22) angeordnet ist, enthält,
eine Gondel (10) zum Unterbringen mindestens der Hydraulikpumpe (8),
einen Turm (12) zum Tragen der Gondel (10),
ein Turmdrehlager (28) zum drehbaren Tragen einer Gondelbasisplatte (10A) der Gondel (10) auf dem Turm (12),
mindestens ein Trägerelement (30) zum Tragen des Statorelements (22) der Hydraulikpumpe (8) auf der Gondelbasisplatte (10A) der Gondel (10),
mindestens einen Hydraulikmotor (14), der dazu ausgestaltet ist, durch das druckbeaufschlagte Öl, das durch den Mechanismus (20) zur Erzeugung druckbeaufschlagten Öls erzeugt wird, angetrieben zu werden, und
einen Generator (16), der dazu ausgestaltet ist, durch den mindestens einen Hydraulikmotor (14) angetrieben zu werden,
wobei das Rotorelement (18) ausschließlich durch das mindestens eine Pumpenlager (24) an die Gondelbasisplatte (10A) befestigt ist, so dass es drehbar ist,
wobei das mindestens eine Trägerelement (30) ausgestaltet ist, um das Statorelement (22) auf der Gondelbasisplatte (10A) zu tragen, so dass die Hydraulikpumpe (8) zwischen der Nabe (6) und einer Mittelachse des Turmdrehlagers (28) angeordnet ist, und
wobei das mindestens eine Trägerelement (30) einen Zugangsdurchgang (32) zum Verbinden eines ersten Raums und eines zweiten Raums enthält, wobei der erste Raum in der Gondel (10) angeordnet ist und die Hydraulikpumpe (8) aufnimmt und der zweite Raum in der Gondel (10) und auf einer gegenüberliegenden Seite des mindestens einen Trägerelements (30) von dem ersten Raum angeordnet ist, wobei die Anlage zur Stromerzeugung aus erneuerbarer Energie (2) **dadurch gekennzeichnet ist, dass**:
das Statorelement (22) radial außerhalb des Rotorelements (18) angeordnet ist, und
das mindestens eine Trägerelement (30) ein rohrförmiges Bauteil (36) ist, das einen gebogenen Abschnitt (30D) enthält, der sich von der Gondelbasisplatte (10A) zur Nabe (6) hin erstreckt, um eine Endfläche des Statorelements (22), das von der Nabe (6) entfernt liegt, zu erreichen,
wobei der gebogene Abschnitt (30D) ein distales Ende aufweist, das mit einer Endfläche des Statorelements (22) verbunden ist, die von der Nabe (6) entfernt liegt, und
das rohrförmige Bauteil (36) eine Öffnung enthält, die an einer Außenseite einer im Querschnitt gekrümmten Form des gebogenen Abschnitts (30D) angeordnet ist, wobei die Öffnung als der Zugangsdurchgang (32) dient.

9. Vorrichtung (2) zur Stromerzeugung aus erneuerbarer Energie nach einem der Ansprüche 6 bis 8,
wobei das Rotorelement (18) einen hohlen Teil (18A) enthält, der mindestens eines von einer Vorrichtung, einem Kabel oder einem Rohr in der Gondel (10) unterbringen kann, wobei der hohle Teil (18A) innerhalb des Rotorelements (18) angeordnet ist.

10. Vorrichtung (2) zur Stromerzeugung aus erneuerbarer Energie nach Anspruch 9,
wobei der hohle Teil (18A) einen Schleifring zum elektrischen Verbinden eines stationären Kabels und eines rotierenden Kabels, das mit dem Rotorelement (18) rotiert, unterbringt.

11. Vorrichtung (2) zur Stromerzeugung aus erneuerbarer Energie nach einem der Ansprüche 6 bis 10,
wobei der Mechanismus (20) zur Erzeugung druckbeaufschlagten Öls enthält:
mindestens einen Nockenring (45), der an einer äußeren Umfangsfläche des Rotorelements (18) angeordnet und dazu ausgestaltet ist, mit dem Rotorelement zu rotieren, wobei der mindestens eine Nockenring (45) eine Mehrzahl von Vorsprüngen und Aussparungen, die in einer Umfangsrichtung angeordnet sind, enthält,
eine Mehrzahl von Zylindern (44), die an einer Statorelementseite angeordnet sind und radial an einer Außenseite des mindestens einen Nockenrings (45) angeordnet sind,
eine Mehrzahl von Kolben (46), von denen jeder dazu ausgestaltet ist, durch die Vorsprünge und Aussparungen des mindestens einen Nockenrings (45) angetrieben zu werden, um mit einem jeweiligen der Zylinder (44) zu gleiten, und
Niederdruckventile (50) und Hochdruckventile (52) zum Zuführen und Ablassen von Betriebsöl zu den bzw. von den Hydraulikkammern (48), von denen jede durch einen entsprechenden der Zylinder (44) und einen entsprechenden der Kolben (46), die im Zylinder (44) angeordnet sind, definiert ist.

12. Vorrichtung (2) zur Stromerzeugung aus erneuerbarer Energie nach einem der Ansprüche 1 bis 11,
wobei das Trägerelement (30) einen einteilig mit der Gondelbasisplatte (10A) ausgebildeten Guss enthält.

13. Vorrichtung (2) zur Stromerzeugung aus erneuerbarer Energie nach einem der Ansprüche 1 bis 12,
wobei die Anlage zur Stromerzeugung aus erneuerbarer Energie (2) eine Windturbinenanlage zur Stromerzeugung ist, die elektrischen Strom im Generator erzeugt, indem sie die Windenergie, die sie durch mindestens einen Flügel (4) vom Wind aufnimmt und die als eine erneuerbare Energiequelle dient, einsetzt.

## Revendications

1. Appareil de production d'électricité à énergie renouvelable (2), comprenant :
au moins une pale (4) ;
un moyeu (6) sur lequel est montée la au moins une pale (4) ;
une pompe hydraulique (8) incluant une partie de rotor (18) fixée sur le moyeu (6) et configurée pour tourner avec le moyeu (6), un mécanisme de production d'huile sous pression (20) configuré pour produire une huile sous pression par rotation de la partie de rotor (18), une partie de stator (22) qui forme un espace intérieur de pompe pour accueillir le mécanisme de production d'huile sous pression (20) avec la partie de rotor (18), et au moins un palier de pompe (24) disposé entre la partie de rotor (18) et la partie de stator (22) ;
une nacelle (10) pour loger au moins la pompe hydraulique (8) ;
un mât (12) pour soutenir la nacelle (10) ;
un palier de rotation en lacet (28) pour soutenir en rotation une plaque de base de nacelle (10A) de la nacelle (10) sur le mât (12) ;
au moins une partie de soutien (30) pour soutenir la partie de stator (22) de la pompe hydraulique (8) sur la plaque de base de nacelle (10A) de la nacelle (10) ;
au moins un moteur hydraulique (14) configuré pour être entraîné par l'huile sous pression produite par le mécanisme de production d'huile sous pression (20) ; et
un générateur (16) configuré pour être entraîné par le au moins un moteur hydraulique (14),
dans lequel la partie de rotor (18) est soutenue contre la plaque de base de nacelle (10A) exclusivement par le au moins un palier de pompe (24) de façon à pouvoir tourner,
dans lequel la au moins une partie de soutien (30) est configurée pour soutenir la partie de stator (22) sur la plaque de base de nacelle (10A) de sorte que la pompe hydraulique (8) soit disposée entre le moyeu (6) et un axe central du palier de rotation en lacet (28), et
dans lequel la au moins une partie de soutien (30) inclut un passage d'accès (32) pour relier un premier espace et un second espace, le premier espace étant disposé dans la nacelle (10) et accueillant la pompe hydraulique (8), et le second espace étant disposé dans la nacelle (10) et sur un côté opposé de la au moins une partie de soutien (30) depuis le premier espace, l'appareil de production d'électricité à énergie renouvelable (2) étant **caractérisé en ce que** :
la partie de stator (22) est disposée radialement à l'intérieur de la partie de rotor (18),
la au moins une partie de soutien (30) est un élément tubulaire (36) incluant une partie fléchie (30D) qui s'étend depuis la plaque de base de nacelle (10A) jusqu'au moyeu (6),
la partie fléchie (30D) présente une extrémité distale reliée à l'extrémité de la partie de stator (22) qui est éloignée du moyeu (6), et
l'élément tubulaire (36) inclut une ouverture disposée sur un côté extérieur d'une forme de section transversale incurvée de la partie fléchie (30D), l'ouverture servant de passage d'accès (32).

2. Appareil de production d'électricité à énergie renouvelable (2) selon la revendication 1,
dans lequel la partie de stator (22) inclut une partie creuse (18A) à même d'accueillir au moins l'un parmi un dispositif, un câble ou un tuyau dans la nacelle (10), la partie creuse (18A) étant disposée à l'intérieur de la partie de stator (22) .

3. Appareil de production d'électricité à énergie renouvelable (2) selon la revendication 2,
dans lequel le au moins un moteur hydraulique (14) est disposé dans la partie creuse (18A) de la partie de stator (22).

4. Appareil de production d'électricité à énergie renouvelable (2) selon la revendication 3,
dans lequel la partie de stator (22) inclut un canal d'écoulement interne (40) pour acheminer ou refouler une huile de travail vers et depuis le mécanisme de production d'huile sous pression (20), le canal d'écoulement interne (40) s'étendant radialement vers l'intérieur depuis le mécanisme de production d'huile sous pression (20), et
dans lequel un tuyau d'huile (15) pour transférer l'huile de travail est disposé dans la partie creuse (18A) et entre la pompe hydraulique (8) et le au moins un moteur hydraulique (14), le tuyau d'huile (15) présentant une extrémité reliée au canal d'écoulement interne (40).

5. Appareil de production d'électricité à énergie renouvelable (2) selon l'une quelconque des revendications 1 à 4,
dans lequel le mécanisme de production d'huile sous pression (20) inclut :
au moins une came annulaire (45) disposée sur une surface circonférentielle intérieure de la partie de rotor (18) et configurée pour tourner avec la partie de rotor (18), la au moins une came annulaire (45) incluant une pluralité de saillies et d'évidements agencés dans une direction circonférentielle ;
une pluralité de cylindres (44) disposés sur un côté de partie de stator et agencés radialement sur un côté intérieur de la au moins une came annulaire (45) ;
une pluralité de pistons (46) chacun configuré pour être entraîné par les saillies et évidements de la au moins une came annulaire (45) pour coulisser à l'intérieur de l'un correspondant des cylindres (44) ; et
des soupapes basse pression (50) et des soupapes haute pression (52) pour acheminer et refouler une huile de travail vers et depuis des chambres hydrauliques (48) chacune définie par l'un correspondant des cylindres (44) et l'un correspondant des pistons (46) disposés dans le cylindre (44).

6. Appareil de production d'électricité à énergie renouvelable (2) comprenant :
au moins une pale (4) ;
un moyeu (6) sur lequel est montée la au moins une pale (4) ;
une pompe hydraulique (8) incluant une partie de rotor (18) fixée sur le moyeu (6) et configurée pour tourner avec le moyeu (6), un mécanisme de production d'huile sous pression (20) configuré pour produire une huile sous pression par rotation de la partie de rotor (18), une partie de stator (22) qui forme un espace intérieur de pompe pour accueillir le mécanisme de production d'huile sous pression (20) avec la partie de rotor (18), et au moins un palier de pompe (24) disposé entre la partie de rotor (18) et la partie de stator (22) ;
une nacelle (10) pour loger au moins la pompe hydraulique (8) ;
un mât (12) pour soutenir la nacelle (10) ;
un palier de rotation en lacet (28) pour soutenir en rotation une plaque de base de nacelle (10A) de la nacelle (10) sur le mât (12) ;
au moins une partie de soutien (30) pour soutenir la partie de stator (22) de la pompe hydraulique (8) sur la plaque de base de nacelle (10A) de la nacelle (10) ;
au moins un moteur hydraulique (14) configuré pour être entraîné par l'huile sous pression produite par le mécanisme de production d'huile sous pression (20) ; et
un générateur (16) configuré pour être entraîné par le au moins un moteur hydraulique (14),
dans lequel la partie de rotor (18) est soutenue contre la plaque de base de nacelle (10A) exclusivement par le au moins un palier de pompe (24) de façon à pouvoir tourner,
dans lequel la au moins une partie de soutien (30) est configurée pour soutenir la partie de stator (22) sur la plaque de base de nacelle (10A) de sorte que la pompe hydraulique (8) soit disposée entre le moyeu (6) et un axe central du palier de rotation en lacet (28), et
dans lequel la au moins une partie de soutien (30) inclut un passage d'accès (32) pour relier un premier espace et un second espace, le premier espace étant disposé dans la nacelle (10) et accueillant la pompe hydraulique (8), et le second espace étant disposé dans la nacelle (10) et sur un côté opposé de la au moins une partie de soutien (30) depuis le premier espace, l'appareil de production d'électricité à énergie renouvelable (2) étant **caractérisé en ce que** :
la partie de stator (22) est disposée radialement à l'extérieur de la partie de rotor (18), et
la au moins une partie de soutien (30) inclut une première partie de soutien (30A) et une seconde partie de soutien (30B), la première partie de soutien (30A) étant disposée sur une région avant de la plaque de base de nacelle (10A) qui est adjacente au moyeu (6) et soutenant une surface d'extrémité d'une partie inférieure de la partie de stator (22) qui est adjacente au moyeu (6), et la seconde partie de soutien (30B) étant disposée sur une région arrière de la plaque de base de nacelle (10A) qui est éloignée du moyeu (6) et soutenant une surface d'extrémité d'une partie supérieure de la partie de stator (22) qui est éloignée du moyeu (6).

7. Appareil de production d'électricité à énergie renouvelable (2) comprenant :
au moins une pale (4) ;
un moyeu (6) sur lequel est montée la au moins une pale (4) ;
une pompe hydraulique (8) incluant une partie de rotor (18) fixée sur le moyeu (6) et configurée pour tourner avec le moyeu (6), un mécanisme de production d'huile sous pression (20) configuré pour produire une huile sous pression par rotation de la partie de rotor (18), une partie de stator (22) qui forme un espace intérieur de pompe pour accueillir le mécanisme de production d'huile sous pression (20) avec la partie de rotor (18), et au moins un palier de pompe (24) disposé entre la partie de rotor (18) et la partie de stator (22) ;
une nacelle (10) pour loger au moins la pompe hydraulique (8) ;
un mât (12) pour soutenir la nacelle (10) ;
un palier de rotation en lacet (28) pour soutenir en rotation une plaque de base de nacelle (10A) de la nacelle (10) sur le mât (12) ;
au moins une partie de soutien (30) pour soutenir la partie de stator (22) de la pompe hydraulique (8) sur la plaque de base de nacelle (10A) de la nacelle (10) ;
au moins un moteur hydraulique (14) configuré pour être entraîné par l'huile sous pression produite par le mécanisme de production d'huile sous pression (20) ; et
un générateur (16) configuré pour être entraîné par le au moins un moteur hydraulique (14),
dans lequel la partie de rotor (18) est soutenue contre la plaque de base de nacelle (10A) exclusivement par le au moins un palier de pompe (24) de façon à pouvoir tourner,
dans lequel la au moins une partie de soutien (30) est configurée pour soutenir la partie de stator (22) sur la plaque de base de nacelle (10A) de sorte que la pompe hydraulique (8) soit disposée entre le moyeu (6) et un axe central du palier de rotation en lacet (28), et
dans lequel la au moins une partie de soutien (30) inclut un passage d'accès (32) pour relier un premier espace et un second espace, le premier espace étant disposé dans la nacelle (10) et accueillant la pompe hydraulique (8), et le second espace étant disposé dans la nacelle (10) et sur un côté opposé de la au moins une partie de soutien (30) depuis le premier espace, l'appareil de production d'électricité à énergie renouvelable (2) étant **caractérisé en ce que** :
la partie de stator (22) est disposée radialement à l'extérieur de la partie de rotor (18), et
la au moins une partie de soutien (30) est un élément tubulaire (36) incluant une partie fléchie (30D) qui s'étend depuis la plaque de base de nacelle (10A) en direction du moyeu (6) pour atteindre une surface d'extrémité de la partie de stator (22) qui est adjacente au moyeu (6) de façon à entourer la pompe hydraulique (8),
la partie fléchie (30D) présente une extrémité distale reliée à la surface d'extrémité de la partie de stator (22) adjacente au moyeu (6), et
l'élément tubulaire (36) inclut une ouverture disposée sur un côté extérieur d'une forme de section transversale incurvée de la partie fléchie (30D), l'ouverture servant de passage d'accès (32).

8. Appareil de production d'électricité à énergie renouvelable (2) comprenant :
au moins une pale (4) ;
un moyeu (6) sur lequel est montée la au moins une pale (4) ;
une pompe hydraulique (8) incluant une partie de rotor (18) fixée sur le moyeu (6) et configurée pour tourner avec le moyeu (6), un mécanisme de production d'huile sous pression (20) configuré pour produire une huile sous pression par rotation de la partie de rotor (18), une partie de stator (22) qui forme un espace intérieur de pompe pour accueillir le mécanisme de production d'huile sous pression (20) avec la partie de rotor (18), et au moins un palier de pompe (24) disposé entre la partie de rotor (18) et la partie de stator (22) ;
une nacelle (10) pour loger au moins la pompe hydraulique (8) ;
un mât (12) pour soutenir la nacelle (10) ;
un palier de rotation en lacet (28) pour soutenir en rotation une plaque de base de nacelle (10A) de la nacelle (10) sur le mât (12) ;
au moins une partie de soutien (30) pour soutenir la partie de stator (22) de la pompe hydraulique (8) sur la plaque de base de nacelle (10A) de la nacelle (10) ;
au moins un moteur hydraulique (14) configuré pour être entraîné par l'huile sous pression produite par le mécanisme de production d'huile sous pression (20) ; et
un générateur (16) configuré pour être entraîné par le au moins un moteur hydraulique (14),
dans lequel la partie de rotor (18) est soutenue contre la plaque de base de nacelle (10A) exclusivement par le au moins un palier de pompe (24) de façon à pouvoir tourner,
dans lequel la au moins une partie de soutien (30) est configurée pour soutenir la partie de stator (22) sur la plaque de base de nacelle (10A) de sorte que la pompe hydraulique (8) soit disposée entre le moyeu (6) et un axe central du palier de rotation en lacet (28), et
dans lequel la au moins une partie de soutien (30) inclut un passage d'accès (32) pour relier un premier espace et un second espace, le premier espace étant disposé dans la nacelle (10) et accueillant la pompe hydraulique (8), et le second espace étant disposé dans la nacelle (10) et sur un côté opposé de la au moins une partie de soutien (30) depuis le premier espace, l'appareil de production d'électricité à énergie renouvelable (2) étant **caractérisé en ce que** :
la partie de stator (22) est disposée radialement à l'extérieur de la partie de rotor, (18) et
la au moins une partie de soutien (30) est un élément tubulaire (36) incluant une partie fléchie (30D) qui s'étend depuis la plaque de base de nacelle (10A) en direction du moyeu (6) pour atteindre une surface d'extrémité de la partie de stator (22) qui est éloignée du moyeu (6),
la partie fléchie (30D) présente une extrémité distale reliée à une surface d'extrémité de la partie de stator (22) qui est éloignée du moyeu (6), et
l'élément tubulaire (36) inclut une ouverture disposée sur un côté extérieur d'une forme de section transversale incurvée de la partie fléchie (30D), l'ouverture servant de passage d'accès (32).

9. Appareil de production d'électricité à énergie renouvelable (2) selon l'une quelconque des revendications 6 à 8,
dans lequel la partie de rotor (18) inclut une partie creuse (18A) à même d'accueillir au moins l'un parmi un dispositif, un câble ou un tuyau dans la nacelle (10), la partie creuse (18A) étant disposée à l'intérieur de la partie de rotor (18).

10. Appareil de production d'électricité à énergie renouvelable (2) selon la revendication 9,
dans lequel la partie creuse (18A) accueille une bague collectrice pour raccorder électriquement un câble stationnaire et un câble rotatif qui tourne avec la partie de rotor (18).

11. Appareil de production d'électricité à énergie renouvelable (2) selon l'une quelconque des revendications 6 à 10,
dans lequel le mécanisme de production d'huile sous pression (20) inclut :
au moins une came annulaire (45) disposée sur une surface circonférentielle extérieure de la partie de rotor (18) et configurée pour tourner avec la partie de rotor, la au moins une came annulaire (45) incluant une pluralité de saillies et d'évidements agencés dans une direction circonférentielle ;
une pluralité de cylindres (44) disposés sur un côté de partie de stator et agencés radialement sur un côté extérieur de la au moins une came annulaire (45) ;
une pluralité de pistons (46) chacun configuré pour être entraîné par les saillies et évidements de la au moins une came annulaire (45) pour coulisser à l'intérieur de l'un respectif des cylindres (44) ; et
des soupapes basse pression (50) et des soupapes haute pression (52) pour acheminer et refouler une huile de travail vers et depuis des chambres hydrauliques (48) chacune définie par l'un correspondant des cylindres (44) et l'un correspondant des pistons (46) disposés dans le cylindre (44).

12. Appareil de production d'électricité à énergie renouvelable (2) selon l'une quelconque des revendications 1 à 11,
dans lequel la partie de soutien (30) inclut un moule formé d'un seul tenant avec la plaque de base de nacelle (10A).

13. Appareil de production d'électricité à énergie renouvelable (2) selon l'une quelconque des revendications 1 à 12,
dans lequel l'appareil de production d'électricité à énergie renouvelable (2) est un appareil de production d'électricité à turbine éolienne qui produit une énergie électrique dans le générateur en utilisant une énergie éolienne reçue par au moins une pale (4) d'un vent servant de source d'énergie renouvelable.
